Europäisches Patentamt

**European Patent Office**

**Office européen des brevets**

(11) Veröffentlichungsnummer: **0 031 124**

**A1**

(12) **EUROPÄISCHE PATENTANMELDUNG**

(21) Anmeldenummer: **80107935.1**

(22) Anmeldetag: **16.12.80**

(51) Int. Cl.³: **C 09 K 11/02**
**H 01 J 9/227, H 01 J 29/18**

(30) Priorität: **21.12.79 DE 2951693**

(43) Veröffentlichungstag der Anmeldung:
**01.07.81 Patentblatt 81/26**

(84) Benannte Vertragsstaaten:
**BE FR GB IT NL**

(71) Anmelder: **International Standard Electric Corporation**
**320 Park Avenue**
**New York New York 10022(US)**

(72) Erfinder: **Beckerle, Heinz**
**Albstrasse 5**
**D-7307 Aichwald(DE)**

(72) Erfinder: **Gröner, Peter**
**Karlstrasse 44**
**D-7307 Denkendorf(DE)**

(74) Vertreter: **Thul, Leo, Dipl.-Phys.**
**Kurze Strasse 8 Postfach 300 929**
**D-7000 Stuttgart 30(DE)**

(54) Verfahren zur Verbesserung der Verarbeitbarkeit von Leuchtstoffen bei Beschirmungsverfahren.

(57) Um gleichmäßige Beschirmungsbedingungen zu erhalten, werden die Leuchtstoffkörner vor dem Beschirmen mit einem Polymerisat überzogen. Dadurch werden Ungleichmäßigkeiten in der Oberflächenbeschaffenheit unterschiedlicher Leuchstoffe ausgeglichen, wodurch es möglich wird, auch Leuchtstoffe verschiedener Hersteller, bzw. jungfräuliche oder rückgew onnene Leuchtstoffe ohne Veränderung Beschirmungsparameter bei der Leuchtschirmherstellung verwendung zu können.

EP 0 031 124 A1

Croydon Printing Company Ltd.

Patentanwalt
Dipl.-Phys. Leo Thul
Kurze Str. 8, Postfach 300 929
D-7000 Stuttgart 30
Deutschland

- 1 -

H.Beckerle-P.Gröner 1-1

## Verfahren zur Verbesserung der Verarbeitbarkeit von Leuchtstoffen bei Beschirmungsverfahren

Die Erfindung betrifft ein Verfahren zur Verbesserung der Verarbeitbarkeit von Leuchtstoffen bei Beschirmungsverfahren.

Bei der Herstellung von Leuchtschirmen wird häufig ein Leuchtstoff in einer wässrigen Lösung suspendiert und danach auf dem Leuchtschirmträger abgeschieden. Die Abscheidung erfolgt durch einfache Sedimentation oder durch Belichten, wodurch in der Suspension befindliche Substanzen aushärten und dabei an dem Trägermaterial haften. Letzteres Verfahren wird großtechnisch vor allem bei der Herstellung von Farbbildröhren - Bildschirmen verwendet.

./.

Wesentliche von Leuchtstoffen beeinflusste Parameter sind: Suspendiorbarkeit, Sedimendationsverhalten, Füllung, Kontur und Haftung der Leuchtstoffgebiete auf dem Schirm, Farbüberlagerungen und andere. Fast für jeden verwendeten Leuchtstoff müssen diese zahlreichen Parameter neu optimiert werden. Um die Verarbeitbarkeit von Leuchtstoffen zu verbessern, insbesondere um ihre Suspendierbarkeit zu erhöhen, werden die Leuchtstoffpartikel schon bei der Herstellung mit anorganischen Substanzen, z.B. Silikaten, Boraten oder Phosphaten umhüllt.

Bei der Rückgewinnung von Leuchtstoffen wird diese Umhüllung häufig zerstört, was dazu führt, daß ein rückgewonnener Leuchtstoff sich nicht unter denselben Beschirmungsbedingungen verarbeiten läßt wie ein jungfräulicher Leuchtstoff. Auch die Leuchtstoffe unterschiedlicher Hersteller, die mit unterschiedlichen anorganischen Substanzen umhüllt sind, lassen sich nicht unter gleichen Beschirmungsbedingungen verarbeiten.

Von dieser Problematik ausgehend liegt der Erfindung die Aufgabe zugrunde, ein Verfahren zur Verbesserung der Verarbeitbarkeit von Leuchtstoffen anzugeben, welches es erlaubt auch Leuchtstoffe verschiedener Hersteller, bzw. jungfräuliche oder rückgewonnene Leuchtstoffe ohne Veränderung der Beschirmungsparameter in Verfahren zur Leuchtschirmherstellung verwenden zu können.

Die Lösung dieser Aufgabe ist durch den ersten Patentanspruch gegeben. Auf die Leuchtstoffteilchen wird ein Polymerisat aufgebracht, nach welcher Behandlung alle

./.

Leuchtstoffe diesselben Oberflächeneigenschaften aufweisen und daher unter gleichen Beschirmungsbedingungen verarbeitbar sind. Es ist vorteilhaft dabei ein Polymerisat zu verwenden, welches bei den auf das Beschirmen folgenden Ausheizprozessen vollständig verdampft, oder das Rückstände bildet, welche die Leuchtfähigkeiten und die Lebensdauer der Röhre nicht beeinflussen. Vorteilhafte Ausführungsformen des Verfahrens sind in den Unteransprüchen angegeben.

Das Verfahren zum Aufbringen des Polymerisats auf die Leuchtstoffteilchen hängt von der Art des verwendeten Polymerisats ab. In Frage kommen dispergierbare oder lösliche Polymerisate. Dispergierbare Polymerisate sind z.B. Styrol-Butadiene, Acrylate,Polyvinylacetatpolymerisate und andere mehr. Als lösliche Polymerisate kommen z.B. Salze von verschiedenen Carbonsäuren in Frage. Durch Änderung des pH-Wertes der Suspensionen oder durch Zugabe mehrwertiger Kationen zu den Lösungen werden die Polymerisate zum Ausflocken und zur Absorption auf den Leuchtstoffpartikeln gebracht. Die Erfindung wird im folgenden anhand einiger Ausführungsbeispiele näher erläutert.

Beispiel 1:

In einem 5-Liter Becherglas werden 500 g eines europiumdotierten Yttriumoxidleuchtstoffs in 4 Liter demineralisertem Wasser suspendiert. Zu der Suspension gibt man 7,5 g einer 38 %igen Polyacrylatdispersion,wie sie z.B. unter den Warenzeichen Primal oder Rhoplex bei der Fa. Röhm & Haas erhältlich ist. Um eine gleichmäßige Verteilung zu erreichen, läßt man mehrere Stunden, typischerweise 4 - 8 Stunden rühren. Durch Zugabe von 5 ml einer einmolaren Aliminiumnitratlösung und Einstellen des pH-Wertes auf 8 - 8,5 mit einmolarer Ammoniaklösung, wird die Polyacrylatdispersion

./

zum Ausflocken gebracht. Danach wird ca. noch eine Stunde gerührt, um den Polyacrylatteilchen Gelegenheit zu geben, sich auf den Oberflächen der Leuchtstoffpartikel abzulagern. Dann läßt man sedimentieren und wäscht den Leuchtstoff mit demineralisiertem Wasser. Anschließend wird er bei 130°C getrocknet.

Die Verfahrenschritte des Sedimentierens, des Waschens und des Trocknens sind bei allen Verfahren gleich und werden daher in den folgenden Beispielen nicht mehr erwähnt.

Beispiel 2:

In einem 5-Liter Becherglas werden 500 g eines europiumdotierten Yttrium-Oxisulfidleuchtstoffs in 4 Liter demineralisiertem Wasser suspendiert. Zu der Suspension gibt man 12,5 g einer 10 %igen Lösung des Ammoniumsalzes einer Polycarbonsäure, wie sie z.B. unter dem Warenzeichen Latekol AS von der Fa. BASF erhältlich ist. Zur gleichmäßigen Verteilung aller Komponenten rührt man 4 Stunden. Dann senkt man den pH-Wert durch Zugabe von einmolarer Salpetersäure auf 3 und fällt damit die freie Säure aus. Man rührt eine weitere Stunde, wobei sich die Polymerisatteilchen auf den Leuchtstoffteilchen ablagern.

Beispiel 3:

In einem 5-Liter Becherglas werden 2,5 g des Natriumsalzes einer Polyacrylsäure, wie sie z.B. unter dem Namen Pigmentverteiler N von der Fa. BASF erhältlich ist, in 4 Liter deminiralisiertem Wasser gelöst. Unter Rühren setzt man 500 g eines ZnS-Leuchtstoffes zu und rührt für weitere 4 Stunden. Durch Einstellen des pH-Wertes auf 2 mit einmolarer Salpetersäure wird dann die Polyacrylsäure ausgefällt. Man rührt eine weitere Stunde, wobei sich die

Polymerisatteilchen auf den Leuchtstoffteilchen ablagern.

Bei den beschriebenen Beispielen wurden jeweils unterschiedliche Leuchtstoffe und unterschiedliche Polymerisate benutzt. Es ist jedoch möglich, jedes der beschriebenen Polymerisate bei jedem der beschriebenen Leuchtstoffe und auch bei zahlreichen anderen Leuchtstoffen zu verwenden. In einer Fertigung, in der mehrere verschiedene Leuchtstoffsubstanzen verarbeitet werden, wie z.B. bei der Herstellung von Farbbildröhren, ist es zweckmäßig, für alle Leuchtstoffe dasselbe Polymerisat zur Oberflächenbedeckung zu verwenden. Dadurch sind selbst für unterschiedliche Leuchtstoffsubstanzen die Beschirmungsbedingungen sehr ähnlich. Bei gleichen Leuchtstoffsubstanzen werden Unterschiede zwischen Leuchtstoffen von verschiedenen Herstellern oder Unterschiede zwischen jungfräulichen oder rückgewonnenen Leuchtstoffen praktisch völlig ausgeglichen. Wichtig für die Auswahl des Polymerisates ist praktisch nur die Bedingung, daß es bei den auf das Beschirmen folgenden Ausheizschritten, die bei ca. $400^{\circ}$-$500^{\circ}$C durgeführt werden, ohne Rückstände verdampft, oder daß es nur Rückstände bildet, die die Leuchtfähigkeit des Leuchtstoffes und die Lebensdauer der Röhre nicht beeinflussen.

H.Beckerle-P.Gröner 1-1

Patentansprüche:

1) Verfahren zur Verbesserung der Verarbeitbarkeit von Leuchtstoffen, welcher Leuchtstoff in einer wässrigen Suspension zur Herstellung eines Bildschirmes verwendet wird, d a d u r c h g e k e n n z e i c h n e t , daß auf den Leuchtstoffteilchen in einer wässrigen Suspension ein Polymerisat zur Absorption gebracht wird und der Leuchtstoff danach gewaschen, aus der Suspension getrennt und getrocknet wird.

2) Verfahren nach Anspruch 1, d a d u r c h g e k e n n z e i c h n e t , daß das Polymerisat in der Suspension dispergiert ist und durch Änderung des pH-Wertes zum Ausflocken und zur Absorption gebracht wird.

3) Verfahren nach Anspruch 1, d a d u r c h g e k e n n z e i c h n e t , daß das Polymerisat in der Suspension gelöst ist und durch Änderung des pH-Wertes zum Ausflocken und zur Absorption gebracht wird.

4) Verfahren nach Anspruch 1, d a d u r c h g e k e n n z e i c h n e t , daß das Polymerisat in der Suspension gelöst ist und durch Zugabe eines mehrwertigen Kations zum Ausflocken und Absorption gebracht wird.

Dr. J/Sam
6.11.1979

./.

**Europäisches Patentamt**

## EUROPÄISCHER RECHERCHENBERICHT

Nummer der Anmeldung

EP 80107935.1

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - B - 1 447 791 (RCA)<br><br>+ Spalte 1, Zeilen 15-18; Spalte 3, Zeilen 47-51; Anspruch 1 +<br><br>-- | 1 | C 09 K 11/02<br>H 01 J 9/227<br>H 01 J 29/18 |
| | DE - A1 - 2 813 661 (LICENTIA) (11-10-1979)<br><br>+ Ansprüche 1-3; Seite 3, Zeilen 10-14; Seite 4, Zeilen 8-29 +<br><br>-- | 1 | |
| X | DE - A1 - 2 848 312 (HITACHI) (07-06-1979)<br><br>+ Anspruch 1; Seiten 4,5; Seite 9, Zeilen 13-24; Seite 10, Zeilen 1-18; Seite 19, Zeilen 25-28 +<br><br>-- | 1-4 | **RECHERCHIERTE SACHGEBIETE (Int. Cl.³)**<br><br>C 09 K<br>H 01 J<br>B 05 D |
| X | US - A - 4 049 845 (LOZIER)<br><br>+ Zusammenfassung; Spalte 1, Zeilen 45-68; Spalte 2, Zeilen 1-19; Beispiele 1-3; Spalte 4, Zeilen 10-12,29-49; Spalte 6, Zeilen 3-7, 37-41; Ansprüche 1,7,9,12 +<br><br>---- | 1-4 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 06-03-1981 | SCHÄFER |

EPA form 1503.1 06.78